# EUROPÄISCHE PATENTSCHRIFT

(11) **EP 0 866 757 B1**
(45) Veröffentlichungstag und Bekanntmachung des Hinweises auf die Patenterteilung: **01.03.2000**
(21) Anmeldenummer: 96934740.0
(22) Anmeldetag: 18.10.1996
(51) Int. Cl.: B60T 8/26, B60T 8/94

(54) **VERFAHREN ZUM ÜBERWACHEN EINER BREMSANLAGE MIT ABS UND EBV**
PROCESS FOR MONITORING A BRAKING SYSTEM WITH ANTILOCK SYSTEM AND ELECTRONIC BRAKING POWER DISTRIBUTION
PROCEDE DE CONTROLE D'UN SYSTEME DE FREINAGE A ANTIBLOCAGE ET A REPARTITION ELECTRONIQUE DE LA PUISSANCE DE FREINAGE

(30) Priorität: 23.12.1995 DE 19548703
(43) Veröffentlichungstag der Anmeldung: 30.09.1998
(73) Patentinhaber: Continental Teves AG & Co. oHG, 60488 Frankfurt (DE)
(72) Erfinder: BURKHARD, Dieter, D-67714 Waldfischbach-Burgalben (DE); EHMER, Norbert, D-65760 Eschborn (DE); PRÖGER, Thomas, D-63322 Rödermark 1 (DE); VOLZ, Alexander, D-63303 Dreieich (DE); KUNZ, Gerald, D-55411 Bingen (DE); FENNEL, Helmut, D-65812 Bad Soden (DE)
(74) Vertreter: Blum, Klaus-Dieter, Dipl.-Ing.
(86) Internationale Anmeldenummer: EP9604529
(87) Internationale Veröffentlichungsnummer: WO9723371

(56) Entgegenhaltungen:
- DE-A- 3 418 044
- DE-A- 3 901 923
- DE-A- 4 036 940
- DE-A- 4 122 282

## Beschreibung

Die Erfindung bezieht sich auf ein Verfahren zum Überwachen einer Bremsanlage, die mit Blockierschutzregelung (ABS) und elektronischer Regelung der Bremskraftverteilung (EBV) ausgerüstet ist und die zwei hydraulisch getrennte Bremskreise aufweist, an die jeweils die Radbremsen der Räder einer Fahrzeugachse angeschlossen sind.Es handelt sich um ein Verfahren, bei dem bei Ausfall des Vorderachs-Bremskreises die EBV-Funktion aufgehoben bzw. ein Eintritt in eine EBV-Regelung verhindert wird.

Antiblockiersysteme (ABS) gehören heute bereits zu den Standardausrüstungen von Fahrzeugen der gehobenen und mittleren Preisklassen. Dies gilt in zunehmenden Maße auch für kleinere oder preisgünstigere PKW's. Üblicherweise werden hydraulische Bremsanlagen verwendet, in deren Bremsleitungen elektrisch betätigbare Hydraulikventile, nämlich Einlaß-/Auslaßventilpaare, eingefügt sind. Mit den Einlaßventilen läßt sich der von dem Hauptzylinder der Bremsanlage zu einer Radbremse führende Druckmittelweg sperren bzw. unterbrechen, wogegen über das zugehörige Auslaßventil, das in seiner Ruhelage auf Sperren geschaltet ist, ein Druckmittelabfluß aus der Radbremse und damit ein Druckabbau herbeigeführt werden kann. Wichtigste Eingangsgröße des Regelungssystems (ABS) ist das Drehverhalten der einzelnen Räder, das üblicherweise mit Hilfe von radindividuellen Drehzahlsensoren ermittelt wird. In Abhängigkeit von dem Drehverhalten der einzelnen Räder wird dann der Bremsdruck in den Radbremsen der geregelten Räder geregelt und moduliert.

Bekanntlich ist es erforderlich, die Bremskraftverteilung auf die Radbremsen der Vorderräder in Relation zu der Bremskraft auf die Radbremsen der Hinterräder zu variieren, um statische und dynamische Achslastverlagerungen auszugleichen. Hierzu werden seit altersher mechanische, fest eingestellte Druckminderer oder last- und/oder verzögerungsabhängige Bremskraftregler, die in zahlreichen Varianten auf dem Markt sind, verwendet. Es bietet sich nun an, Hydraulikventile der vorgenannten Art zur Steuerung oder Regelung der Bremskraftverteilung einzusetzen und hierzu die mit Radsensoren gewonnenen Informationen über das Drehverhalten der einzelnen Räder auszuwerten. Dies gilt insbesondere für Fahrzeuge mit ABS, bei denen solche Hydraulikventile, Radsensoren und elektronische Regler ohnehin vorhanden sind.

Eine solche elektronisch geregelte Bremskraftverteilung (EBV) beruht grundsätzlich auf der Ermittlung oder Berechnung der Schlupfdifferenz, d.h. der Differenz des Bremsschlupfes der Vorderräder zu dem Bremsschlupf der Hinterräder. Bei optimaler Bremskraftverteilung ist der Schlupf an der Vorderachse etwas höher als an der Hinterachse, so daß einerseits ein relativ hoher Beitrag der Vorderräder zum Bremsvorgang und andererseits eine hohe Fahrstabilität sichergestellt sind; die Hinterräder sind bekanntlich nur bei relativ geringem Schlupf in der Lage, hohe Seitenführungskräfte aufzubringen.

Bei elektronischer Regelung der Bremskraftverteilung in Verbindung mit Bremsanlagen, bei denen jeweils die Räder einer Achse an einen gemeinsamen hydraulischen Bremskreis angeschlossen sind, das ist die sogenannte Schwarz/Weiß-Bremskreisaufteilung, ist aus Sicherheitsgründen eine frühzeitige Erkennung eines Vorderachs-Bremskreisausfalls von besonderer Bedeutung. Die Bremsanlage muß nämlich auch bei einem solchen Bremskreisausfall eine gesetzlich vorgeschriebene Mindestverzögerung des Fahrzeugs ermöglichen. Da sich der Bremsschlupf der Hinterräder, wenn die EBV in Funktion ist, am Schlupf der Vorderräder orientiert, würde bei Vorderachs-Bremskreisausfall und folglich "schlupflos" oder mit extrem niedrigem Schlupf rotierenden Vorderräder die Bremsdruckbeschränkung durch die EBV-Regelung viel zu früh einsetzen; der Bremsweg würde zu lang.

Zur Erhöhung der Funktionssicherheit einer Bremsanlage mit EBV ist es aus der DE 42 24 971 A1 (P 7363) bereits bekannt, während eines Bremsvorgangs die Vorderräder mit einem kurzen Druckabbaupuls zu beaufschlagen. Bleibt die Reaktion auf den Druckabbaupuls aus, könnte ein Defekt an der Vorderachse vorliegen, weshalb aus Sicherheitsgründen in dieser Situation die EBV-Funktion aufgehoben wird.

Die Erkennung eines Vorderachsbremskreisausfalls ist natürlich auch mit Hilfe eines Drucksensors möglich, der das Ausbleiben von Bremsdruck in den Vorderradbremsen trotz einer Bremsbetätigung erkennt, signalisiert und eine Abschaltung der EBV-Funktion auslöst.

Der Erfindung liegt nun die Aufgabe zugrunde, ein Verfahren zur Überwachung einer Bremsanlage vorzuschlagen, daß auch ohne Verwendung eines solchen Bremsdrucksensors den Ausfall des Vorderachs-Bremskreises frühzeitig und zuverlässig erkennen läßt.

Es hat sich herausgestellt, daß diese Aufgabe durch das im Anspruch 1 beschriebene Verfahren gelöst werden kann, dessen Besonderheit darin besteht, daß die EBV-Funktion erst bei einer über einem vorgegebenen Grenzwert liegenden Fahrzeug-verzögerung freigegeben wird, daß zum Erkennen eines Vorderachs-Bremskreisausfalles Beschleunigungskriterien, nämlich von dem Beschleunigungsverhalten der Fahrzeugräder abhängige Kriterien, vorgegeben und überwacht werden und eine Schlupfbandüberwachung verbunden mit einer Beschleunigungsbandüberwachung erfolgt, sowie daß beim "Erkennen" eines Beschleunigungskriteriums bzw. beim Überschreiten eines als Beschleunigungskriterium vorgegebenen Grenzwertes und/oder beim "Erkennen" von außerhalb des Schlupfbandes oder des Beschleunigungsbandes liegender Werte ein "Verdacht" eines Vorderachs-Bremskreisausfalls signalisiert und ein Eingriff in die EBV-Regelung vorgenommen wird.

Bei "Verdacht" eines Vorderachs-Bremskreisausfalls werden dann die für den EBV-Einsatz bzw. EBV-Eintritt maßgeblichen Regelungsschwellen angehoben. Dadurch wird die EBV-Regelung in Richtung auf eine geringere Eintritts-Empfindlichkeit oder späteres Einsetzen geändert. Bei "Verdacht" und gerade stattfindender EBV-Regelung wird dieser Regelungsvorgang durch pulsweise oder kontinuierliche Bremsdruck-Einsteuerung in die Hinterradbremsen beendet.

Die Erfindung beruht also auf der Erkenntnis, daß aus dem Raddrehverhalten, nämlich den Beschleunigungswerten, und dem Radschlupf, Kriterien und Grenzwerte abgeleitet werden können, die, wenn bestimmte Bedingungen erfüllt und Werte überschritten werden, die Gefahr oder den Verdacht eines Vorderachs-Bremskreisausfalls signalisieren bzw. zum Ausdruck bringen. Dieser Verdacht tritt sehr frühzeitig auf. Sensoren zur Messung des tatsächlichen Druckes in den Vorderradbremsen werden dadurch überflüssig, was eine erhebliche Einsparung bei gleichzeitig erhöhter Sicherheit und Zuverlässigkeit zur Folge hat.

Beim Auftreten eines solchen Verdachtes kann dann - je nach Situation - die EBV-Regelung beendet, sofort abgeschaltet oder in Richtung auf einen größeren Beitrag der Hinterräder zum Bremsvorgang geändert werden.

Treten die Kriterien oder Grenzwertüberschreitungen während eines Bremsvorganges oder während eines Zündungslaufs wiederholt auf, was eine Bestätigung des Anfangsverdachtes darstellt, wird zweckmäßigerweise die EBV-Funktion vorübergehend oder bis zur Reparatur abgeschaltet.Wenn erwünscht, kann der Fehler gleichzeitig auch signalisiert werden.

Wenn dagegen nach dem Auftreten eines Verdachtes Meßwerte auftreten bzw. Kriterien erfüllt werden, die auf einen intakten Vorderachs-Bremskreis hinweisen, z. B. eine starke Verzögerung des Fahrzeugs, oder es treten ABS-Regelzyklen an der Vorderachse auf, wird die Verdachtssituation wieder aufgehoben.

Einige besonders vorteilhafte Ausführungsbeispiele der Erfindung sind in den Unteransprüchen beschrieben.

Weitere Merkmale, Vorteile und Anwendungsmöglichkeiten der Erfindung gehen aus der folgenden Beschreibung anhand der beigefügten Abbildungen und Diagramme hervor.

Es zeigen
- Fig. 1: in vereinfachter, symbolischer Darstellungsweise die wichtigsten Komponenten einer Bremsanlage mit ABS und EBV,
- Fig. 2: eine Schaltungsanordnung zur Durchführung des erfindungsgemäßen Verfahrens und
- Fig. 3a-c: Diagramme zur Erläuterung der Funktionsweise des erfindungsgemäßen Verfahrens.

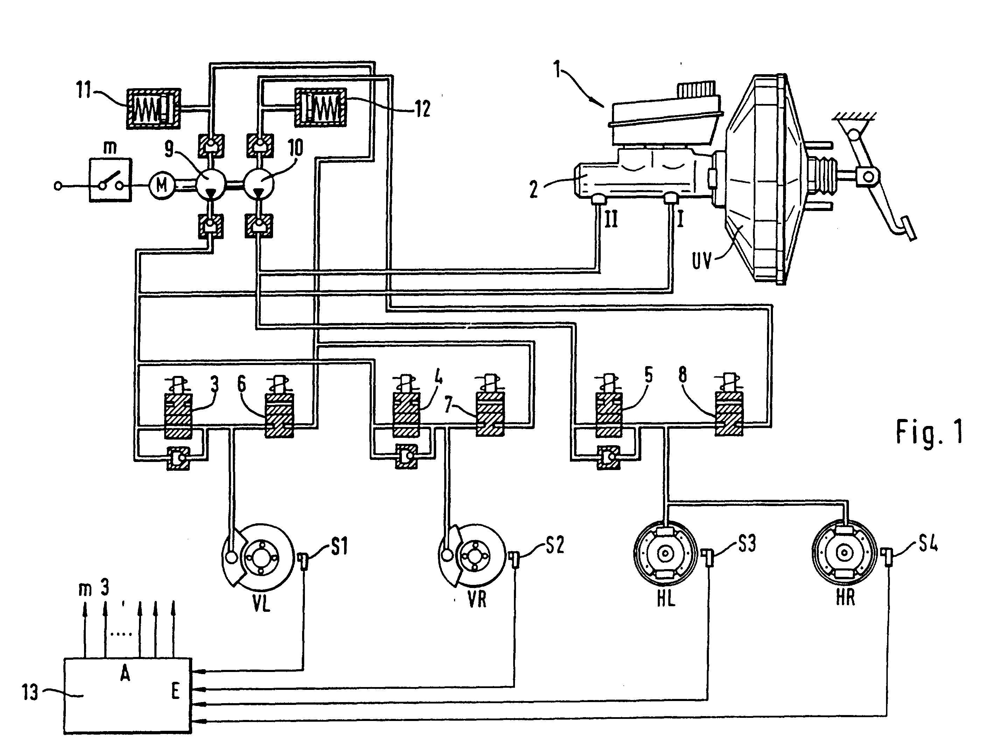

Fig. 1 zeigt ein Ausführungsbeispiel einer Bremsanlage mit ABS und EBV, bei der die Radbremsen in sogenannter Schwarz/Weiß-Bremskreisaufteilung an einen zweikreisigen Bremsdruckgeber 1 angeschlossen sind. Der Bremsdruckgeber 1 umfaßt einen Tandem-Hauptzylinder 2 mit vorgeschaltetem Unterdruckverstärker UV. Die beiden hydraulisch getrennten Bremskreise des Hauptzylinders 2 sind mit I und II bezeichnet.

In den Bremsleitungen sind elektromagnetisch betätigbare Hydraulikventile, nämlich Einlaß- und Auslaßventile 3,4,5; 6,7,8, eingefügt. Außerdem sind eine zweikreisige Hydraulikpumpe 9,10 mit einem gemeinsamen elektrischen Antriebsmotor M und Niederdruckspeicher 11,12 vorgesehen. Des weiteren ist die Bremsanlage mit radindividuellen Sensoren S1 bis S4 ausgerüstet, deren Signale einem Eingang E eines elektronischen Reglers 13 zugeführt werden. Diese Sensorsignale sind die wichtigsten Eingangsgrößen des dargestellten Regelungssystems.

In dem Regler 13 werden die Sensorsignale verarbeitet, und es werden Bremsdrucksteuersignale erzeugt. Über die angedeuteten Ausgänge A des Reglers 13 werden die Bremsdrucksteuersignale den elektrisch betätigbaren Hydraulikventilen 3 bis 8 und über den Ausgang m dem Antriebsmotor M der Hydraulikpumpe 9,10 zugeführt.

Mit Hilfe der Hydraulikpumpen 9,10, die während einer Blokkierschutzregelung (ABS-Funktion) eingeschaltet sind, wird das in der Bremsdruck-Abbauphase über die Auslaßventile 6 bis 8 abgeleitete Druckmittel in die Bremskreise I, II rückgefördert. Die Niederdruckspeicher 11,12 dienen in der Druckabbauphase als Zwischenspeicher.

An den Bremskreis I sind die beiden Vorderräder VL, VR über je ein Einlaß-/Auslaßventilpaar 3,6; 4,7 und an den Bremskreis II die Hinterräder HL,HR über ein gemeinsames Ventilpaar 5,8 angeschlossen. Es handelt sich also um eine Schwarz/Weiß-Aufteilung.

Die elektronische Regelung der Bremskraftverteilung auf die Vorderräder und auf die Hinterräder (EBV-Funktion) erfolgt ebenfalls mit Hilfe des Reglers 13, der hierzu die mit den Radsensoren S1 bis S4 gewonnenen, über den Eingang E zugeführten Informationen über das Drehverhalten der einzelnen Räder auswertet.

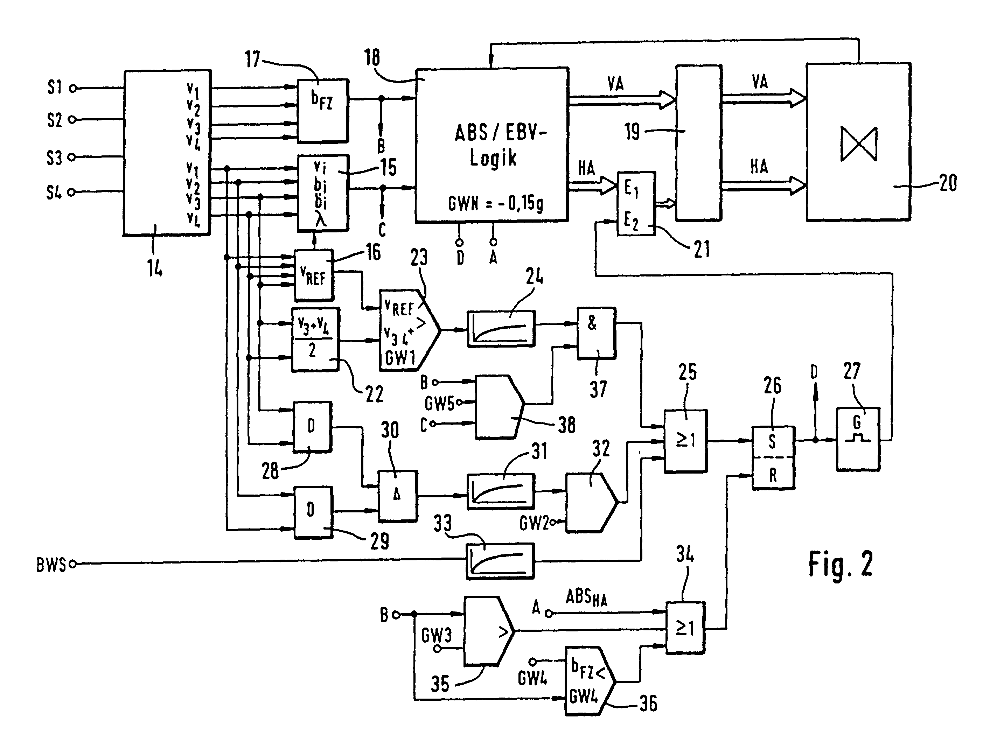

Ein Ausführungsbeispiel für den prinzipiellen Aufbau des elektronischen Reglers 13, der die ABS- und EBV-Funktionen ausführt, wird im folgenden anhand der in Fig. 2 dargestellten Schaltungsanordnung erläutert.

Dargestellt ist eine Schaltungsanordnung, die sowohl zur Blockierschutzregelung (ABS) als auch zur elektronischen Regelung der Bremskraftverteilung (EBV) dient. Die Eingangsinformationen dieses Regelungssystems werden mit Hilfe der Radsensoren S1 bis S4 gewonnen, die nach Aufbereitung in einem Schaltkreis 14 Signale abgeben, die dem Geschwindigkeitsverlauf der einzelnen Räder, nämlich die Geschwindigkeiten v₁ bis v₄, wiedergeben.

Für die prinzipielle Arbeitsweise des erfindungsgemäßen Verfahrens ist es ohne Bedeutung, ob die Sensorsignale durch eine Schaltungsanordnung der dargestellten Art auf Basis festverdrahteter Logik, durch Datenverarbeitung mit Hilfe von Mikrocomputern oder dergleichen oder durch eine Kombination beider Systeme realisiert wird. Die dargestellte Schaltungsanordnung wurde mit Hilfe von programmgesteuerten Schaltungssystemen, speziell Mikrocomputern, verwirklicht.

In dem Ausführungsbeispiel nach Fig. 2 werden in einem Schaltkreis 15 die Rad-Geschwindigkeitssignale vᵢ (i=1...4) ausgewertet. Es werden vor allem die Radverzögerungen bzw. - beschleunigungen bᵢ, die Änderungen dieser Größen bᵢ (auch als "Ruck" bezeichnet) und der Schlupf λᵢ der einzelnen Räder errechnet. Zur Bestimmung des Radschlupfes wird eine Fahrzeug-Referenzgeschwindigkeit v_{REF} herangezogen, die in bekannter Weise mit Hilfe einer Schaltung 16 durch logische Verknüpfung der Radgeschwindigkeitssignale vᵢ gewonnen wird.

Aus den Radgeschwindigkeitssignalen vᵢ werden außerdem im vorliegenden Ausführungsbeispiel in einem gesonderten Schaltungs- oder Programmblock 17 die Fahrzeugverzögerung oder -beschleunigung b_{FZ} errechnet, die ebenso wie die in der Auswerteschaltung 15 gewonnenen, radabhängigen Signale einer ABS/EBV-Logik 18 zugeführt werden. In der Logik 18 werden aus den Eingangsinformationen unter Anwendung komplexer Regelalgorithmen, vorzugsweise mit Hilfe programmgesteuerter Schaltkreise und Schaltungssysteme, wie Mikrocomputer, elektrische Signale zur Steuerung von Aktuatoren gewonnen, die in dem Ausführungsbeispiel nach Fig. 1 in Form von Hydraulikventilen 3 bis 8 ausgebildet sind. In der Schaltungsanordnung nach Fig. 2 werden die Ausgangssignale der ABS/EBV-Logik 18 zunächst einer Ventilsteuerung 19 zugeführt, in der die eigentlichen Steuersignale für die Aktuatoren 20 bzw. Hydraulikventile (3 bis 8 nach Fig. 1) erzeugt werden.

Die Signalwege für die Vorderradbremsen VA (VL, VR) und für die Hinterradbremsen HA (HL, HR) sind in Fig. 2 getrennt dargestellt, weil durch die nachfolgend beschriebenen Schaltkreise, die zur Durchführung des erfindungsgemäßen Verfahrens erforderlich sind, in bestimmten Situationen über einen Schaltkreis 21 in die Hinterrad-Bremsensteuerung eingegriffen wird.

Die Schaltungsanordnung nach Fig. 2 gehört, wie Fig. 1, zu einer Bremsanlage mit Schwarz/Weiß-Aufteilung und mit Vorderradantrieb.

Erfindungsgemäß wird eine EBV-Regelung grundsätzlich erst dann zugelassen, wenn das Fahrzeug einen bestimmten Verzögerungsgrenzwert GWN, der z.B. zwischen -0,1g und -0,2g liegt und im vorliegenden Fall etwa GWN=-0,15g beträgt, überschreitet. Die ABS/EBV-Logik 18 bzw. die durch diese Logik symbolisierten Programmteile sorgen für die Einhaltung dieser Bedingung.

Außerdem werden nach vorliegender Erfindung Beschleunigungskriterien und ein Schlupfband sowie ein Beschleunigungsband vorgegeben und überwacht. Die hierzu erforderlichen Schaltblöcke sind ebenfalls in vereinfachter Darstellung in Fig. 2 wiedergegeben.

Ein Addierer- oder Mittelwertbildender 22 dient zusammen mit der die Referenz-Geschwindigkeit V_{**REF**} ermittelnden Schaltung 16, einem Vergleicher 23 und einem Tiefpaßfilter 24 zur Schlupfbandüberwachung. Wird eine Schlupfdifferenz zwischen Vorder- und Hinterachse, die hier durch Vergleich des Hinterradgeschwindigkeits-Mittelwertes als Ausgangssignal der Schaltung 22 und der Fahrzeug-Referenzgeschwindigkeit V_{**REF**} als Ausgangssignal der Schaltung 16 in dem Vergleicher 23 errechnet wird, um einen vorgegebenen Grenzwert GW1 überschritten und dauert dieser Zustand so lange an, daß auch am Ausgang des Tiefpaßfilters 24 ein Signal ansteht, spricht die Schlupfbandüberwachung an. Dies bedeutet, daß über ein ODER-Gatter 25, wenn eine durch ein Gatter 37 vorgegebene UND- Bedingung erfüllt ist, eine Kippstufe 26 (ein Flip-Flop) angesteuert wird, die wiederum, wenn das Flip-Flop 26 gesetzt ist, einen Pulsgenerator 27 in Gang setzt. Der Pulsgenerator 27 steuert über die Schaltung 21, die ein Multiplexer ist, und über die Ventilansteuerung 19 den Hinterrad-bremsen zugeordnete Ventile innerhalb des Ventilblockes 20.

Der Schlupf-Grenzwert GW1 beträgt im vorliegenden Beispiel etwa 1%. Der Schlupf der Vorderräder darf also um höchstens 1% größer sein als der Hinterradschlupf.Hier wird die Referenzgeschwindigkeit V_{**REF**} ausgewertet; bei Vorderrad-Kreisausfall gibt nämlich V_{**REF**} die mittlere Geschwindigkeit der Vorderräder wieder.

Die Zeitkonstante des Tiefpaßfilters 24 liegt hier bei etwa 500ms. Der Pulsgenerator 27 führt in diesem Fall zu einer pulsförmigen Ansteuerung und Öffnung der zu den Hinterrad-bremsen führenden Einlaßventile, z. B. zur Ansteuerung des für beide Hinterräder gemeinsamen hydraulischen Einlaßventiles 5 in der Ausführungsart nach Fig. 1.

Die Schlupfbandüberwachung ist erfindungsgemäß mit einer Beschleunigungsbandüberwachung verbunden. Hierzu wird in einem Vergleicher 38 die über einen Anschluß "B" zugeführte Fahrzeugbeschleunigung b_{FZ} mit den Beschleunigungen bᵢ (i=1...4) der einzelnen Fahrzeugräder i verglichen. "bᵢ" steht am Ausgang der Auswertungsschaltung 15 zur Verfügung und wird über den Anschluß "C" dem Vergleicher 38 zugeleitet.

Liegt die Beschleunigung bᵢ jedes Rades innerhalb eines Bandes, das durch eine maximale Abweichung GW5 von z.B. ±0,15g bezogen auf die Fahrzeugbeschleunigung bzw. -verzögerung b_{FZ} vorgegeben ist, wird über das UND-Gatter 37 der Weg zu dem ODER-Gatter 25, zum Flip-Flop 26 und zum Pulsgenerator 27 freigegeben.

Ein Beschleunigungskriterium wird nach Fig. 2 mit Hilfe von Schaltblöcken 28 bis 32 überwacht bzw. "erkannt". Hierzu werden in Differenzierstufen 28,29 jeweils die gemittelte Hinterrad-Beschleunigung (in der Differenzierstufe 28) und der Vorderradbeschleunigung (in der Stufe 29) errechnet. In einem Subtrahierer 30 wird dann die Differenz dieser beiden gemittelten Beschleunigungswerte gebildet. Nach dem Passieren eines Tiefpasses 31, dessen Zeitkonstante im vorliegenden Ausführungsbeispiel etwa 140 ms beträgt, wird der gefilterte Differenzwert in dem Vergleicher 32 mit einem vorgegebenen Beschleunigungsgrenzwert GW2 von z. B. 0,15g verglichen. Liegt der gefilterte Differenzwert der gemittelten Hinterrad- und Vorderradbeschleunigungen über dem Grenzwert GW2, führt dies über das ODER-Gatter 25 und über die Kippstufe 26 wiederum zu der Ansteuerung des Pulsgenerators 27 mit den zuvor bereits beschriebenen Auswirkungen auf den Hinterrad-Bremsdruckverlauf.

Zu dem dritten Eingang des ODER-Gatters 25 führt ein an einem Behälterwarnschalter BWS angeschlossener Signalweg. Ein mit Hilfe eines weiteren Tiefpaßfilters 33 gefiltertes BWS-Signal führt also ebenfalls zur Ansteuerung des Pulsgenerators 27. Ein BWS-Signal wird bei einer hydraulischen Bremsanlage dann ausgegeben, wenn z. B. aufgrund eines Lecks im Hydrauliksystem der Bremsflüssigkeitsstand in einem Hydraulikbehälter bzw. die Bremsflüssigkeitsmenge im System auf einen kritischen Wert absinkt. Im vorliegenden Fall wird vor allem die Bremsflüssigkeitsmenge im Vorderachs-Bremskreis überwacht und ein BWS-Signal ausgegeben, wenn im Vorderachs-Bremskreis ein Fehler auftritt.

Die Kippstufe 26 kann allerdings den Pulsgenerator 27 nur so lange ansteuern, bis ein Reset-Signal am Reset-Eingang der Kippstufe 26 bzw. am Ausgang eines ODER-Gatters 34 hervorgerufen wird. Dieses ODER-Gatter 34 hat drei Eingänge. Über einen Anschluß B und über Vergleicher 35,36 wird die momentane Fahrzeugbeschleunigung bzw. -verzögerung b_{FZ} mit Grenzwerten GW3 und GW4 verglichen. GW4 beträgt beispielsweise - 0,5g, GW3 ungefähr 0g. Der Grenzwert GW4 wird also bei einer relativ hohen Abbremsung des Fahrzeugs, die auf einen intakten Vorderachs- und Hinterachs-Bremskreis hinweist, erreicht. Das Überschreiten von GW3 zeigt an, daß der Bremsvorgang beendet ist und das Fahrzeug beschleunigt.

Über einen dritten Eingang, der mit "A" bezeichnet ist und mit einem Ausgang der ABS/EBV-Logik in Verbindung steht, wird das ODER-Gatter 34 dann angesteuert, wenn an einem oder an beiden Hinterrädern eine Antiblockierregelung erfolgt. In dieser Situation ist natürlich eine Ansteuerung des Pulsgenerators 27 nicht angebracht.

Außerdem wird die Kippstufe 26 zurückgestellt bzw. der Reset-Eingang dieser Kippstufe angesteuert, wenn an den Vorderrädern wiederholt, z. B. zweimal, ABS-Regelzyklen festgestellt werden. Solche Regelzyklen zeigen an, daß der Vorderachs-Bremskreis intakt sein muß. Der besseren Übersichtlichkeit wegen ist dieser Signalweg in Fig. 2 nicht dargestellt. Es sind noch weitere Bedingungen denkbar, die auf einen intakten Vorderachs-Bremskreis hinweisen und daher zum Zurückstellen oder Halten der Kippstufe 26 ausgewertet werden können.

Das Erfüllen der verschiedenen, zuvor beschriebenen Bedingungen, die zu einem Signal am ODER-Gatter 25 führen, werden bei dem erfindungsgemäßen Verfahren als "Verdacht" auf einen Vorderachs-Bremskreisausfall interpretiert und führen daher, wenn kein Reset-Signal ansteht, zum Kippen der Stufe 26 und dadurch zu einem pulsförmigen oder kontinuierlichen Anstieg des Bremsdruckes in den Hinterradbremsen. Der Eingang E₂ des Multiplexers 21 besitzt Vorrang gegenüber dem Eingang E_{**1**}, so daß unabhängig von dem Ansteuern der Hydraulikventile durch die Logik 18 eine Bremsdruckeinsteuerung mit Hilfe der Ausgangssignale des Generators 27 hervorgerufen wird.

Beim Auftreten des "Verdachtes" außerhalb einer gerade stattfindenden EBV-Regelung werden über den Schaltkreis 21 oder über die ABS/EBV-Logik 18 die Regelungsschwellen derart angehoben bzw. die Ansprechempfindlichkeit der EBV-Regelung verringert, damit, solange dieser Verdacht besteht, ein im Vergleich zu einer EBV-geregelten Abbremsung höherer Bremsdruck auf die Hinterradbremsen wirkt und damit der Anteil der Hinterradbremsen an dem Bremsvorgang höher wird . Hierzu wird der "Verdacht" über einen Ausgang "D" der Kippstufe 26 der ABS/EBV-Logik 18 (Eingang D) gemeldet. Die EBV-Regelungs-Eintrittsschwellen werden daraufhin z.B. von einem "Normalwert" von GWN= -0,15g auf einen Wert zwischen -o,3g bis -0,5g , insbesondere auf einen Wert von etwa -0,35g , erhöht. Die EBV-Regelung wird folglich "unempfindlicher" , bzw. die EBV-Regelung setzt später ein, d.h. erst bei einer höheren Verzögerung.

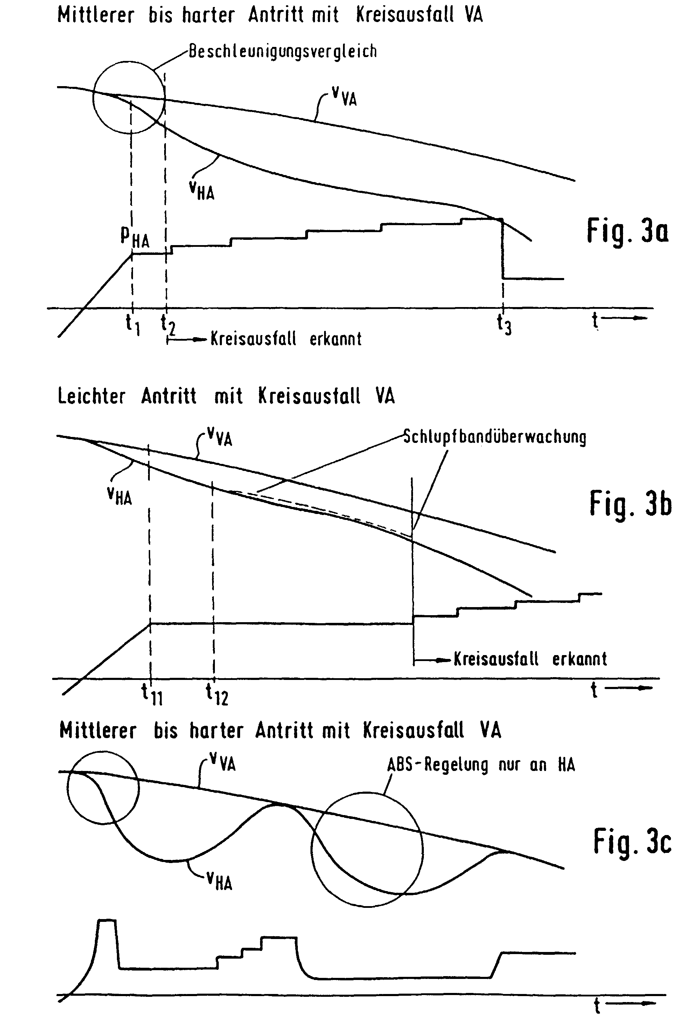

Fig. 3a-c zeigen typisches Raddrehverhalten bei einem Vorderachs-Bremskreisausfall und unterschiedlicher Art und Weise der Bremsbetätigung. Die Beispiele beziehen sich auf ein Fahrzeug mit Vorderachsantrieb.

In Fig. 3a ist bei einem mittleren bis harten Antritt der Bremse bzw. bei einer Bremsbetätigung mit mittlerer bis höherer Pedalkraft das Drehverhalten der Räder an der Vorderachse VA dem Verhalten der Räder an der Hinterachse HA gegenübergestellt.Außerdem ist der Bremsdruckverlauf p_{**HA**} an der Hinterachse, d.h. in den Radbremsen der Hinterräder, wiedergegeben

Infolge eines Vorderachs-Bremskreisausfalls entsteht in der Situation nach Fig. 3a eine Geschwindigkeitsdifferenz zwischen Hinterrädern(v_{**HA**}) und den Vorderrädern (v_{**VA**}). Zum Zeitpunkt t₁ wird eine Beschleunigungs- oder Schlupfschwelle überschritten und dadurch ein Konstanthalten des Bremsdrukkes an der Hinterachse p_{**HA**} ausgelöst.

Zum Zeitpunkt t_{**2**} wird in der Situation und in dem Ausführungsbeispiel, auf das sich Fig. 3a bezieht, ein Beschleunigungskriterium erkannt.Durch Auswerten der Beschleunigungsdifferenz, nämlich der Differenz zwischen der gemittelten Hinterradbeschleunigung und der gemittelten Vorderradbeschleunigung - dies geschieht mit Hilfe der Differenzierstufen 28, 29 und des Subtrahierers 30 in Fig. 2 - und nach Filterung des Differenzsignals mit Hilfe des Tiefpasses 31 wird in dem Vergleicher 32 festgestellt, daß das Beschleunigungskriterium erfüllt ist und somit ein "Verdacht" auf Ausfall des Vorderachskreises besteht. Als Folge dieses Verdachtes wird nur noch ein relativ flacher Bremsdruckanstieg in den Radbremsen der Hinterräder , wie dies der Bremsdruckverlauf p_{HA} in Fig. 3a zeigt, zugelassen.

Zum Zeitpunkt t₃ wird dann im Beispiel nach Fig. 3a infolge eines "normalen" Blockierschutzregelvorgangs ein Bremsdruckabbau an der Hinterachse erforderlich.

Im Beispiel nach Fig. 3b, das für eine Bremsbetätigung mit leichtem Antritt bzw. geringer Pedalkraft gilt, läßt sich der Vorderachs-Bremskreisausfall nicht durch Beschleunigungskriterien, sondern durch die Schlupfbandüberwachung erkennen. Zum Zeitpunkt t_{**11**} wird wiederum eine Beschleunigungs- oder Schlupfschwelle überschritten, was eine Konstanthaltung des Hinterachsbremsdruckes p_{**HA**} zur Folge hat. Zum Zeitpunkt t_{**12**} spricht in dem Beispiel bzw. in der Situation nach Fig. 3b die Schlupfband überwachung an. Wie durch die gestrichelt dargestellte ,zum Zeitpunkt t_{**12**} beginnende Linie angedeutet ist, überschreitet zum Zeitpunkt t_{**12**} die Differenz zwischen den Geschwindigkeitskennlinien v_{VA} und v_{**HA**} - v_{**VA**} ist in diesem Fall, weil der Vorderachs-Bremskreis ausgefallen ist, mit der Fahrzeug(referenz)geschwindigkeit V_{**REF**} identisch - den vorgegebenen Grenzwert, so daß nach einer bestimmten Zeitspanne Kreisausfall bzw. der Verdacht auf Kreisausfall erkannt wird., Diese Zeitspanne ist im Beispiel nach Fig. 2 durch ein Tiefpaßfilter 24, dessen Zeitkonstante z.B. 500 ms betragen kann, definiert. Als Folge dieses Vorderachskreisausfall-Verdachtes wird wiederum in der Situation nach Fig. 3b ein Bremsdruckanstieg (pHA) in den Hinterradbremsen mit flachem Gradienten ausgelöst.

Schließlich zeigt Fig. 3c noch ein Beispiel des Raddrehverhaltens bei mittlerem bis hartem Antritt und Ausfall des Vorderachs-Bremskreises. Durch die einsetzende ABS-Regelung wird in diesem Beispiel der Bremsdruck an den Hinterrädern auf einen für den Bremsvorgang günstigen Wert geregelt. In diesem Fall, nämlich als Folge der ABS-Regelung an der Hinterachse, greift die erfindungsgemäße Schaltungsanordnung in den Bremsvorgang nicht ein.

## Patentansprüche

1. Verfahren zum Überwachen einer Bremsanlage, die mit Blockierschutzregelung (ABS) und elektronischer Regelung der Bremskraftverteilung (EBV) ausgerüstet ist und die zwei hydraulisch getrennte Bremskreise enthält, an die jeweils die Radbremsen der Räder einer Achse angeschlossen sind, im folgenden Schwarz/Weiß-Aufteilung genannt,bei dem bei Ausfall des Vorderachs-Bremskreises die EBV-Funktion aufgehoben wird, dadurch **gekennzeichnet,**
daß die EBV-Funktion bzw. -Regelung erst bei einer über einem vorgegebenen Grenzwert(GWN) liegenden Fahrzeug-verzögerung freigegeben wird,
daß zum Erkennen eines Vorderachs-Bremskreisausfalls Beschleunigungskriterien, nämlich von dem Beschleunigungsverhalten der Fahrzeugräder abhängige Kriterien, vorgegeben und überwacht werden und eine Schlupfbandüberwachung in Verbindung mit einer Beschleunigungsbandüberwachung erfolgt,
sowie daß beim "Erkennen" eines Beschleunigungskriteriums bzw. beim Überschreiten eines als Beschleunigungskriterium vorgegebenen Grenzwertes(GW2) und/oder beim "Erkennen" von außerhalb des Schlupfbandes(GW1) oder des Beschleunigungsbandes(GW5) liegender Werte ein "Verdacht" auf einen Vorderachs-Bremskreisausfalls signalisiert und ein Eingriff in die elektronische Regelung der Bremskraftverteilung (EBV) vorgenommen wird.

2. Verfahren nach Anspruch 1, dadurch **gekennzeichnet**, daß im Normalfall der Grenzwert (GWN) für die Freigabe der EBV-Funktion bei einem Wert zwischen -0,1g und -0,2g, insbesondere bei einem Wert von etwa -o,15g,liegt.

3. Verfahren nach Anspruch 1 oder 2, daurch **gekennzeichnet**, daß bei Verdacht auf einen Vorderachs-Bremskreisausfall die für den EBV-Eintritt maßgeblichen Regelungsschwellen(GWN) angehoben werden bzw. die EBV-Regelung in Richtung auf eine geringere Eintritts-Empfindlichkeit oder späteren Eintritt geändert wird.

4. Verfahren nach einem oder mehreren der Ansprüche 1 bis 3, dadurch **gekennzeichnet**, daß bei "Verdacht" und gerade stattfindender EBV-Regelung dieser Regelungsvorgang durch pulsweise oder kontinuierliche Bremsdruck-Einsteuerung in die Hinterradbremsen beendet wird.

5. Verfahren nach einem oder mehreren der Ansprüche 1 bis 4, dadurch **gekennzeichnet**, daß bei einem Fahrzeug mit Vorderachs-Antrieb beim "Erkennen" eines Beschleunigungskriteriums, bei einem außerhalb des Schlupfbandes oder des Beschleunigungsbandes liegenden Wertes oder bei einem Signal des Behälterwarnschalters (BWS-Signal), d.h. bei einem eine zu geringe Flüssigkeitsmenge im Vorderachs-Bremskreis anzeigenden Signal, ein Verdacht auf einen Vorderachs-Bremskreisausfall signalisiert wird.

6. Verfahren nach einem oder mehreren der Ansprüche 1 bis 4, dadurch **gekennzeichnet**, daß bei einem Fahrzeug mit Hinterachs- oder Allradantrieb beim Erkennen eines außerhalb des Schlupfbandes oder Beschleunigungsbandes liegenden Wertes oder bei Auftreten eines BWS-Signals ein Verdacht auf einen Vorderachs-Bremskreisausfall signalisiert wird.

7. Verfahren nach einem oder mehreren der Ansprüche 1 bis 4, dadurch **gekennzeichnet**, daß bei einem Fahrzeug mit Hinterachs- oder Allradantrieb beim Erkennen eines Beschleunigungskriteriums ein Bremsdruckabbau in den Hinterrad-Bremsen bei einer unter einem vorgegebenen Grenzwert liegenden Fahrzeugverzögerung unterbunden wird, wobei dieser Grenzwert in einer Größenordnung zwischen etwa -0,3g und -0,5g liegt.

8. Verfahren nach einem oder mehreren der Ansprüche 1 bis 7, dadurch **gekennzeichnet**, daß als Beschleunigungskriterium die Differenz zwischen der gemittelten Vorderrad- und der gemittelten Hinterradbeschleunigung vorgegeben wird, wobei für diese Differenz bei einer Fahrzeugverzögerung zwischen etwa -0,1g und -0,5g ein Grenzwert(GW2) in der Größenordnung zwischen 0,1g und 0,3g, insbesondere ein Grenzwert von etwa 0,15g, festgesetzt wird und ein Überschreiten dieses Grenzwertes als "Erkennen" des Beschleunigungskriteriums bewertet wird.

9. Verfahren nach Anspruch 8, dadurch **gekennzeichnet**, daß die Differenz der gemittelten Vorderrad- und der gemittelten Hinterrad-Beschleunigung mit einer Zeitkonstanten in der Größenordnung zwischen 100 und 300 ms (TP-Filter 31), z.B. mit einer Zeitkonstanten von etwa 140 ms, gefiltert wird.

10. Verfahren nach einem oder mehreren der Ansprüche 1 bis 9, dadurch **gekennzeichnet**, daß während einer EBV-Regelung, bei Geradeausfahrt und bei einer Fahrzeugverzögerung unter einem vorgegebenen Grenzwert(GW4), der in der Größenordnung zwischen -0,4g und -0,6g liegt, als zulässiges Schlupfband, dessen Einhaltung überwacht wird, eine Schlupfdifferenz zwischen Vorder- und Hinterachse über eine Filterzeit in der Größenordnung zwischen 300 und 1000 ms (TP-Filter 24) von maximal 1% bis 3% festgelegt und als zulässiges Beschleunigungsband eine gefilterte Beschleunigung unter etwa ± 0,1g bis 0,3g für jedes Rad vorgegeben werden.

11. Verfahren nach Anspruch 10, dadurch **gekennzeichnet**, daß während einer EBV-Regelung, bei Geradeausfahrt und bei einer Fahrzeugverzögerung unter einem Grenzwert(GW4) von etwa -0,5g als zulässiges Schlupfband eine Schlupfdifferenz zwischen Vorder- und Hinterachse über eine Filterzeit von etwa 400 bis 600 ms (TP-Filter 24) von maximal etwa 1% (GW1) festgelegt wird und daß als zulässiges Beschleunigungsband eine gefilterte Beschleunigung unter etwa ± 0,15g (GW5) vorgegeben wird.

12. Verfahren nach einem oder mehreren der Ansprüche 1 bis 11, dadurch **gekennzeichnet**, daß ein "Verdacht" auf einen Vorderachs-Bremskreisausfall bzw. dessen Auswirkungen auf die EBV-Regelung bis zur erneuten Beschleunigung des Fahrzeugs oder bis zum Auftritt einer über einem vorgegebenen Grenzwert(GW4) von z. B. -0,4g bis -0,6g, insbesondere über etwa -0,5g, liegenden Fahrzeug-Verzögerung aufrechterhalten werden.

13. Verfahren nach einem oder mehreren der Ansprüche 1 bis 12, dadurch **gekennzeichnet**, daß ein "Verdacht" bzw. dessen Auswirkungen auf die EBV-Regelung bis zum Auftreten einer bestimmten Anzahl von Regelzyklen an den Vorderrädern, z.B. von mindestens zwei ABS-Regelzyklen, aufrechterhalten wird.

14. Verfahren nach einem oder mehreren der Ansprüche 1 bis 13, dadurch **gekennzeichnet**, daß ein " Verdacht" auf einen Vorderachs-Bremskreisausfall durch das Stillsetzen des Antriebsmotors bzw. Ausschalten der Zündung beendet wird.

15. Verfahren nach einem oder mehreren der Ansprüche 1 bis 14, dadurch **gekennzeichnet**, daß bei wiederholter Erkennung der einen Verdacht auf Vorderachs-Bremskreisausfall auslösenden Kriterien, z. B. bei dreimaliger Erkennung während eines Zündungslaufs, die EBV-Funktion bis zum Auftreten einer über einem vorgegebenen Grenzwert von z. B. -0,5g liegenden Fahrzeugverzögerung oder bis zum Ausschalten der Zündung aufgehoben wird.

## Claims

1. Method of monitoring a brake system which is equipped with anti-lock control (ABS) and a system for electronic control of brake force distribution (EBV) and includes two hydraulically isolated brake circuits to which the wheel brakes of the wheels of one axle are respectively connected, hereinbelow referred to as black/white circuit split-up, wherein the EBV function is deactivated upon failure of the front-axle brake circuit,
**characterized** in that
the EBV function or control is not released until the vehicle deceleration exceeds a predetermined limit value (GWN),
in that, for detection of a front-axle brake circuit failure, acceleration criteria, i.e., criteria responsive to the acceleration behavior of the vehicle wheels, are predetermined and monitored, and slip range monitoring in conjunction with acceleration range monitoring is effected,
and in that upon 'detection' of an acceleration criterion or upon exceeding of a limit value predetermined as acceleration criterion (GW2), and/or upon 'detection' of values which are outside the slip range (GW1) or the acceleration range (GW5), a 'suspected' front-axle brake circuit failure is signalled and intervention into the electronic control of brake force distribution (EBV) is performed.

2. Method as claimed in claim 1,
**characterized** in that in the normal case the limit value (GWN) for the release of the EBV function amounts to a value between -0.1g and -0.2g, especially a value of -0.15g approximately.

3. Method as claimed in claim 1 or claim 2,
**characterized** in that in the event of a 'suspected' front-axle brake circuit failure, the control thresholds (GWN) decisive for the triggering of EBV are raised, or the EBV control is changed to the effect of a reduced triggering sensitivity or a later triggering.

4. Method as claimed in any one or more of claims 1 to 3,
**characterized** in that when failure is 'suspected' during a presently occurring EBV control, the control operation is terminated by a pulsed or continuous delivery of braking pressure into the rear-wheel brakes.

5. Method as claimed in any one or more of claims 1 to 4,
**characterized** in that a suspected front-axle brake circuit failure is signalled in a vehicle with front-axle drive when an acceleration criterion is 'identified', when there is a value which is outside the slip range or the acceleration range, or in the event of a signal of the reservoir alarm switch (BWS signal), i.e., a signal indicative of an insufficient fluid quantity in the front-axle brake circuit.

6. Method as claimed in any one or more of claims 1 to 4,
**characterized** in that a suspected front-axle brake circuit failure is signalled in a vehicle with rear-axle or all-wheel drive when a value which is outside the slip range or acceleration range is detected or when a BWS signal appears.

7. Method as claimed in any one or more of claims 1 to 4,
**characterized** in that when an acceleration criterion is identified in a vehicle with rear-axle or all-wheel drive, braking pressure reduction in the rear-wheel brakes is removed when the vehicle deceleration is below a predetermined limit value, and the limit value ranges in the order between -0.3g and -0.5g approximately.

8. Method as claimed in any one or more of claims 1 to 7,
**characterized** in that the difference between the averaged front-wheel acceleration and the averaged rear-wheel acceleration is predetermined as an acceleration criterion, and a limit value (GW2) in the order between 0.1g and 0.3g, especially a limit value of 0.15g approximately, is fixed for this difference at a vehicle deceleration ranging between roughly -0.1g and -0.5g, and exceeding of this limit value is assessed as a 'detection' of the acceleration criterion.

9. Method as claimed in claim 8,
**characterized** in that the difference between the averaged front-wheel acceleration and the averaged rear-wheel acceleration is filtered with a time constant in the order between 100 and 300 msec (TP filter 31), for example, with a time constant of 140 msec approximately.

10. Method as claimed in any one or more of claims 1 to 9,
**characterized** in that during EBV control, during straight travel, and in the event of a vehicle deceleration below a predetermined limit value (GW4) which ranges in the order between -0.4g and -0.6g, a slip difference between the front and rear axles for a filtering time in the order of between 300 and 1000 msec (TP filter 24) of a maximum of 1% to 3% is fixed as a permitted slip range which is monitored, and a filtered acceleration below ± 0.1g to 0.3g approximately for each wheel is predetermined as a permitted acceleration range.

11. Method as claimed in claim 10,
**characterized** in that during EBV control, during straight travel, and in the event of a vehicle deceleration below a limit value (GW4) of -0.5g approximately, a slip difference between front and rear axles for a filtering time in the order of between 400 and 600 msec (TP filter 24) of a maximum of 1% (GW1) approximately is fixed as a permitted slip range, and in that a filtered acceleration below roughly ± 0.15g (GW5) is predetermined as a permitted acceleration range.

12. Method as claimed in any one or more of claims 1 to 11,
**characterized** in that a 'suspected' front-axle brake circuit failure or the effects thereof on the EBV control is maintained until reacceleration of the vehicle or until the occurrence of a vehicle deceleration which exceeds a predetermined limit value (GW4) of, for example, -0.4g to -0.6g, especially -0.5g approximately.

13. Method as claimed in any one or more of claims 1 to 12,
**characterized** in that a 'suspected failure' or the effects thereof on the EBV control is maintained until the occurrence of a determined number of control cycles on the front wheels, for example, at least two ABS control cycles.

14. Method as claimed in any one or more of claims 1 to 13,
**characterized** in that a 'suspected' front-axle brake circuit failure is terminated by deactivating the drive motor or switching off the ignition.

15. Method as claimed in any one or more of claims 1 to 14,
**characterized** in that upon repeated detection of the criteria which raise the suspicion of a front-axle brake circuit failure, for example, upon detection which occurs three times during the ignition period, the EBV function is deactivated until the occurrence of a vehicle deceleration which is above a predetermined limit value of -0.5g, for example, or until the ignition is switched off.

## Revendications

1. Procédé pour surveiller un système de freinage qui est équipé d'une régulation antiblocage (ABS) et d'une régulation électronique de la répartition de puissance de freinage (EBV) et qui comprend deux circuits hydrauliques séparés de freinage auxquels sont raccordés respectivement les freins de roue des roues de chaque essieu, dans une répartition appelée en "noir et blanc", dans lequel lors d'une défaillance du circuit de freinage de l'essieu avant la fonction EBV est désactivée,
caractérisé en ce que la fonction ou la régulation EBV est seulement activée lors d'une décélération du véhicule située au-dessus d'une valeur limite prédéterminée (GWN),
que pour identifier une défaillance du circuit de freinage de l'essieu avant, des critères d'accélération, à savoir des critères dépendant du comportement en accélération des roues du véhicule, sont prédéterminés et surveillés et qu'une surveillance de gamme de glissement en liaison avec une surveillance de gamme d'accélération s'ensuit,
ainsi que lors d'une "identification" d'un critère d'accélération ou d'un dépassement d'une valeur limite (GW2) prédéterminée comme critère d'accélération et/ou lors d'une "identification" d'une valeur située en dehors de la gamme de glissement (GW1) ou de la gamme d'accélération (GW5), une "présomption" d'une défaillance du circuit de freinage de l'essieu avant est signalée et une entrée en action de la régulation électronique de la répartition de puissance de freinage (EBV) est déclenchée.

2. Procédé selon la revendication 1, caractérisé en ce que dans le cas normal, la valeur limite pour l'activation de la fonction EBV est située à une valeur comprise entre -0,1 g et -0,2 g, en particulier à une valeur d'environ -0,15 g.

3. Procédé selon la revendication 1 ou 2, caractérisé en ce que, lors d'une présomption d'une défaillance du circuit de freinage de l'essieu avant, les seuils de régulation (GWN) s'appliquant à l'entrée en action de la fonction EBV sont augmentés ou la régulation EBV est modifiée dans le sens d'une sensibilité d'entrée réduite ou d'une entrée plus tardive en action.

4. Procédé selon une ou plusieurs des revendications 1 à 3, caractérisé en ce que lors d'une "présomption" et lorsqu'une régulation EBV est déjà en vigueur, ce processus de régulation au moyen d'une commande, sous forme d'impulsions ou continue, de pression de freinage dans les freins de roue arrière, est arrêté.

5. Procédé selon une ou plusieurs des revendications 1 à 4, caractérisé en ce que, dans un véhicule à traction avant, lors d'une "identification" d'un critère d'accélération, quand une valeur est située au-dehors de la gamme de glissement ou de la gamme d'accélération, ou lors d'un signal du commutateur d'alarme de réservoir (signal BWS), c'est-à-dire à l'apparition d'un signal indiquant une quantité trop réduite de fluide dans le circuit de freinage de l'essieu avant, une présomption de défaillance du circuit de freinage de l'essieu avant est signalée.

6. Procédé selon une ou plusieurs des revendications 1 à 4, caractérisé en ce que, dans un véhicule à essieu arrière moteur ou à transmission intégrale, quand une valeur située au-dehors de la gamme de glissement ou de la gamme d'accélération est identifiée ou lors de l'apparition d'un signal BWS, une présomption de défaillance du circuit de freinage de l'essieu avant est signalée.

7. Procédé selon une ou plusieurs des revendications 1 à 4, caractérisé en ce que, dans un véhicule à essieu arrière moteur ou à transmission intégrale, lors de l'identification d'un critère d'accélération, une diminution de pression de freinage dans les freins de roue arrière est interrompue quand une décélération du véhicule est située au-dessous d'une valeur limite prédéterminée, dans lequel cette valeur limite a un ordre de grandeur situé entre environ -0,3 g et -0,5 g.

8. Procédé selon une ou plusieurs des revendications 1 à 7, caractérisé en ce que, comme critère d'accélération la différence entre l'accélération moyenne de roue avant et l'accélération moyenne de roue arrière est prédéterminée, dans lequel, lors d'une décélération du véhicule comprise entre environ -0,1 g et -0,5 g, une valeur limite (GW2) pour cette différence est fixée avec un ordre de grandeur entre -0,1 et -0,3 g, et particulièrement une valeur limite d'environ -0,15 g, et un dépassement de cette valeur limite est considéré comme une "identification" du critère d'accélération.

9. Procédé selon la revendication 8, caractérisé en ce que la différence entre l'accélération moyenne de roue avant et l'accélération moyenne de roue arrière est filtrée avec une constante de temps d'un ordre de grandeur compris entre 100 et 300 ms (filtre passe-bas 31), par exemple avec une constante de temps d'environ 140 ms.

10. Procédé selon une ou plusieurs des revendications 1 à 9, caractérisé en ce que, pendant une régulation EBV, lors d'une circulation à vitesse constante et lors d'une décélération du véhicule inférieure à une valeur limite prédéterminée (GW4) qui a un ordre de grandeur compris entre -0,4 g et -0,6 g, comme gamme autorisée de glissement dont le respect est surveillé, une différence de glissement entre les essieux avant et arrière, avec une constante de temps de filtrage d'un ordre de grandeur compris entre 300 et 1 000 ms (filtre passe-bas 24), est fixée à un maximum de 1 % à 3 %, et comme gamme autorisée d'accélération une accélération filtrée inférieure à environ ± 0,1 g à 0,3 g est prédéterminée pour chaque roue.

11. Procédé selon la revendication 10, caractérisé en ce que, pendant une régulation EBV, lors d'une circulation à vitesse constante et lors d'une décélération du véhicule inférieure à une valeur limite prédéterminée (GW4) d'environ -0,5 g, comme gamme autorisée de glissement une différence de glissement entre les essieux avant et arrière, avec une constante de temps de filtrage d'environ 300 à 600 ms (filtre passe-bas 24), est fixée à un maximum d'environ 1 % (GW1) et que comme gamme autorisée d'accélération une accélération filtrée d'environ ± 0,15 g (GW5) est prédéterminée.

12. Procédé selon une ou plusieurs des revendications 1 à 11, caractérisé en ce qu'une "présomption" d'une défaillance du circuit de freinage de l'essieu avant ou ses conséquences sur la régulation EBV sont maintenues jusqu'à une nouvelle accélération du véhicule ou jusqu'à l'apparition d'une décélération du véhicule située au-dessus d'une valeur limite prédéterminée (GW4) comprise par exemple entre -0,4 g et -0,6 g, en particulier -0,5 g.

13. Procédé selon une ou plusieurs des revendications 1 à 12, caractérisé en ce qu'une "présomption" d'une défaillance du circuit de freinage de l'essieu avant ou ses conséquences sur la régulation EBV sont maintenues jusqu'à l'apparition d'une nombre déterminé de cycles de régulation aux roues avant, par exemple d'au moins deux cycles de régulation ABS.

14. Procédé selon une ou plusieurs des revendications 1 à 13, caractérisé en ce qu'une "présomption" d'une défaillance du circuit de freinage de l'essieu avant est annulée par l'arrêt du moteur de propulsion ou une coupure de l'allumage.

15. Procédé selon une ou plusieurs des revendications 1 à 14, caractérisé en ce que, lors d'une identification répétée des critères de déclenchement d'une "présomption" d'une défaillance du circuit de freinage de l'essieu avant, par exemple lors de trois reconnaissances pendant le fonctionnement de l'allumage, la fonction EBV est désactivée jusqu'à l'apparition d'une décélération du véhicule située au-dessus d'une valeur limite prédéterminée de, par exemple -0,5 g, ou jusqu'à la coupure de l'allumage.
